Europäisches Patentamt

European Patent Office

Office européen des brevets

(19)

(11) **EP 0 593 550 B1**

(12) **EUROPEAN PATENT SPECIFICATION**

(45) Date of publication and mention
of the grant of the patent:
**15.04.1998 Bulletin 1998/16**

(21) Application number: **92913793.3**

(22) Date of filing: **30.06.1992**

(51) Int Cl.⁶: **F02P 5/04**

(86) International application number:
**PCT/EP92/01470**

(87) International publication number:
**WO 93/01410 (21.01.1993 Gazette 1993/03)**

(54) **METHOD FOR CORRECTING THE IGNITION ADVANCE IN A TRANSIENT STATE OF AN INTERNAL-COMBUSTION ENGINE AND ITS APPLICATION TO THE SMOOTHING OUT OF JERKS IN THE SPEED OF THE ENGINE**

VERFAHREN ZUR KORREKTUR DER ZÜNDZEITEINSTELLUNG IM ÜBERGANGSZUSTAND EINER BRENNKRAFTMASCHINE UND SEINE ANWENDUNG ZUR RUCKBEWEGUNGSGLÄTTUNG DER GESCHWINDIGKEIT DES MOTORS

PROCEDE DE CORRECTION DE L'AVANCE A L'ALLUMAGE DANS UN ETAT TRANSITOIRE D'UN MOTEUR A EXPLOSION, ET SON APPLICATION A L'AMORTISSEMENT DES A-COUPS DE CHANGEMENT DE VITESSE DU MOTEUR

(84) Designated Contracting States:
**DE GB IT**

(30) Priority: **09.07.1991 FR 9108585**

(43) Date of publication of application:
**27.04.1994 Bulletin 1994/17**

(73) Proprietor: **SIEMENS AUTOMOTIVE S.A.**
**31036 Toulouse Cédex (FR)**

(72) Inventors:
• **TARROUX, Francis**
  **F-31120 Pinsaguel (FR)**

• **DUPONT, Henri**
  **F-31000 Toulouse (FR)**

(74) Representative: **Epping, Wilhelm, Dr.-Ing. et al**
**Patentanwalt**
**Postfach 22 13 17**
**80503 München (DE)**

(56) References cited:
**EP-A- 0 046 305**      **EP-A- 0 284 054**
**EP-A- 0 339 602**      **US-A- 4 257 377**
**US-A- 4 799 469**

## Description

The present invention relates to a method for correcting the ignition advance in a transient state of an internal-combustion engine propelling a motor vehicle. More particularly, the invention relates to an application of this method to the smoothing out of jerks in the speed of the engine on changing the speed-reducing gear ratio of a gearbox mounted on the output shaft of the engine.

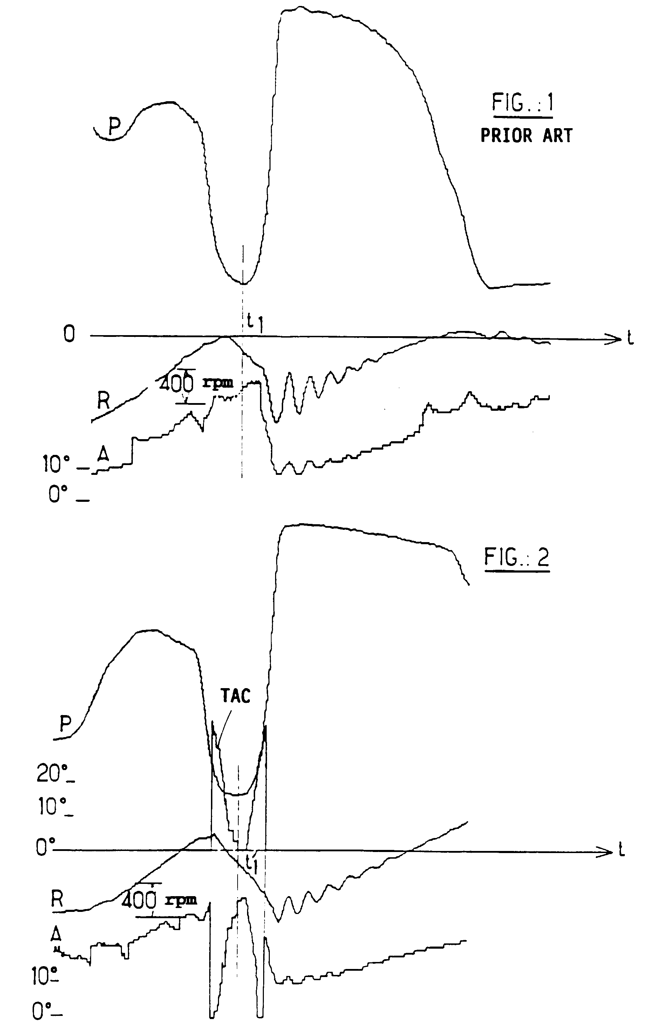

After changing this gear ratio in the gearbox, jerks are at present observed in the speed of the engine during the recoupling of the transmission to the output shaft of the engine through the clutch and the gearbox. In Figure 1 of the attached drawing, the change with time in the absolute pressure P at the induction manifold of an internal-combustion engine and that of the speed R of this engine during such a gear-ratio change are represented. Also represented is the change with time in the ignition-advance angle A of the engine (with respect to top dead centre) as is conventionally established by an ignition-advance computer in which this advance is "mapped" as a function of the speed R of the engine and the induction pressure P so as to optimise the torque provided by the engine. As represented in this Figure 1, prior to passing to a higher gear ratio for example, the speed of the engine begins to increase because of the action of the driver on the accelerator pedal, the pressure at the induction manifold increasing at the same time. The driver then disengages the clutch, changes the gear ratio and re-engages the clutch, the speed falling during these phases (by 1000 to 1200 rpm for example) until the moment ($t_1$) when the driver reaccelerates in order to increase the speed once again. As is visible in Figure 1, this acceleration is accompanied by an oscillation or "surging" of the speed R, which is progressively damped out in order to tend towards a steady state, this oscillation of the speed being manifested by "jerks" which are detrimental to the driving comfort of the vehicle.

In order to eliminate these jerks, a transient correction of the ignition-advance angle has been proposed which is introduced briefly at the start of the reacceleration actuated by the driver, this correction aiming substantially to reduce this advance in order thus to diminish the torque provided by the engine and to facilitate the transition. The correction has a fixed value or is a function of the speed and/or of the pressure at the induction manifold and may be steadily decremented. This solution, which is only implemented when a pressure on the accelerator pedal is detected, has been shown to be insufficient to reduce satisfactorily the jerks observed during the reacceleration.

The object of the present invention is therefore to reduce these jerks effectively, so that the latter do not disturb the driving comfort.

This objective of the invention, together with others which will emerge on reading the present description, has been achieved by means of a method for correcting the ignition advance in a transient state of an internal-combustion engine propelling a motor vehicle, this advance normally being calculated as a function of the speed and of the pressure at the induction manifold of the engine. According to the invention, an entry into a transient state of the engine is detected and the ignition advance is then corrected as a function of the variation of the induction pressure between two consecutive samples thereof, substantially until leaving the transient state.

As will be seen below, taking into account the variation of the induction pressure between two consecutive samples in order transiently to correct the ignition advance normally calculated as a function of the speed and of this induction pressure of the engine, for example, makes it possible substantially to attenuate the oscillations in the speed of the engine which are observed on reacceleration which follows a gear-box speed-reducing gear-ratio change for example, thus substantially improving the driving comfort of the vehicle.

For the implementation of this method in a device for digitally controlling the operation of the engine where the induction pressure is sampled, the transient-state advance correction ($TAC_i$) at the sampling instant (i) is obtained from the expression:

$$TAC_i = \frac{|P_i - P_{i-1}|}{P_i} \times k$$

where $P_i$, $P_i$-1 are samples of the induction pressure and k is a scaling factor.

According to another implementation of the method according to the invention, in such a sampled system, the transient-state advance correction ($TAC_i$) at the sampling instant (i) is obtained from the expression:

$$TAC_i = \frac{|P_i - Pm_i|}{P_i} \times k$$

where $P_i$ is a sample of the induction pressure, k is a factor and $Pm_i$ is a filtered average pressure obtained by the recurrence formula:

$$Pm_i = Pm_{i-1} + (P_i - Pm_{i-1}) \times k'$$

where k' is a factor between 0 and 1.

Other characteristics and advantages of the present invention will emerge on reading the description which follows and on examining the attached drawing in which:

- Figure 1 represents the time graphs of the absolute pressure at the induction manifold, of the speed and of the ignition-advance angle in an internal-combustion engine equipped with a device for controlling the ignition-advance angle as a function of this pressure and of this speed, graphs such as these having been discussed in the preamble of the present description, and

- Figure 2 is similar to Figure 1 and illustrates the advance correction method according to the invention.

The ignition-advance angle A of an internal-combustion engine propelling a motor vehicle, for example, is regulated by mechanical or electronic means so as to optimise the torque provided by the engine at the various gear ratios available, in the steady state. The laws for controlling this angle usually take into account the absolute pressure P at the induction manifold (or the inducted-air flow rate) and the speed R of the engine. Nowadays electronic control devices are commonly used in which these laws are "mapped" as a function of these variables, as has been seen above.

During a transient-state operation of the engine, due for example to a change in the speed-reducing gear ratio of the gearbox, which change is executed by the driver of the vehicle, the fluctuations represented in Figure 1 are observed for the ignition advance A, which fluctuations roughly follow those of the speed of the engine, which speed is affected by exaggerated oscillations when the driver accelerates after execution of the gear-ratio change (as from the instant $t_1$), these oscillations generating "jerks" which lower the level of driving comfort.

According to the present invention, the amplitude of these jerks is substantially reduced, in the transient state of the operation of the engine, by a subtractive correction TAC of the ignition-advance angle A normally established by an electronic device for calculating and controlling this angle, this correction being a function of the variation of the induction pressure between two consecutive samples during this transient state.

Various means may be used for determining the presence of a transient state requiring the application of the correction according to the invention.

It is possible, for example, to command the application of the correction TAC when the absolute value of the derivative of the induction pressure with respect to time exceeds a predetermined threshold. As a variant, it is possible to trigger the advance correction TAC with the aid of a sensor which is sensitive to the position or to the position variation of an accelerator pedal of the vehicle. It is also possible to apply the advance correction TAC under the control of a sensor which is sensitive to the state of a clutch member disposed in the transmission of the vehicle.

Current devices for electronically controlling the ignition and/or the injection of fuel into an internal-combustion engine use as input data variables such as, especially, the absolute pressure at the induction manifold and the speed of the engine, variables which are sampled and digitised. In such a device, the transient-state advance correction ($TAC_i$) is calculated according to the invention at the sampling instant i from the expression:

$$TAC_i = \frac{|P_i - P_{i-1}|}{P_i} \times k$$

where $P_i$, $P_i$-1 are samples of the induction pressure and k is a scaling factor.

It appears that this expression indeed introduces the derivative of the pressure P in a digital form, because of the presence of the difference ($P_i$ - $P_i$-1) in the pressures observed at the end of a sampling period of fixed duration.

This correction TAC is represented in Figure 2 where it appears that the latter effectively follows the variations of the slope of the graph of the induction pressure during the transient phase which coincides with the continuous lowering of the speed R of the engine and which is over when the driver (at the instant $t'_1$) presses on the accelerator again.

Such a transient phase, and the speed fluctuations which it causes, may result especially, as has been seen earlier, from manoeuvres executed by the driver in order to change the speed-reducing gear ratio of a gearbox associated with the engine. The advance correction TAC according to the invention is applied at the moment when the engine is decoupled from the transmission by an action of the driver on a pedal controlling a clutch included in this transmission.

If the oscillations which are observed on reacceleration of the engine by the driver, after executing the gear-ratio change in the case of a vehicle for which the ignition advance is conventionally controlled (Figure 1, after the instant $t_1$) are compared with those in the case of the same vehicle after introduction of the ignition-advance correction TAC according to the invention (Figure 2, after the instant $t'_1$), it is clear that the amplitude of the speed oscillations then observed is greatly reduced by the implementation of the invention (by approximately half).

It appears that the correction TAC subtracted from the normally calculated advance (see Figure 1) gives, in the transient phase, the advance profile A observed in Figure 2 where this profile reveals a complete cancellation of the advance coinciding with the steep-slope variations of the induction pressure. The two major reductions in the engine torque caused by these cancellations of the advance (from non-corrected values of the order of 30 to 40° ahead of top dead centre, as illustrated in Figure 2) prepare the engine for the reacceleration required by the driver which is then put into operation without any appreciable jerks.

As an alternative form of the implementation of the method according to the invention described hereinabove, it is possible to obtain the correction $TAC_1$ from the expression:

$$TAC_i = \frac{|P_i - Pm_i|}{P_i} \times k$$

where $P_i$ is a sample of the absolute pressure at the induction manifold, k is a factor and $Pm_i$ is a filtered average pressure. The filtering of this average pressure is obtained by the recurrence formula:

$$Pm_i = Pm_{i-1} + (P_i - Pm_{i-1}) \times k'$$

where $k'$ is a factor between 0 and 1.

This procedure makes it possible to diminish the sensitivity to small pressure variations of the correction method according to the invention.

Of course, the invention is not limited to the embodiments described and represented which have been given merely by way of example. Thus the invention is not limited to the smoothing-out of jerks observed on changing the speed-reducing gear ratio of the gearbox. It is also applicable to any transient state resulting from controlled accelerations or decelerations, for example with the aid of the accelerator pedal. A position sensor for this pedal, such as a sensor which is sensitive to the "foot up"/"foot down" transition, in either direction, may serve to detect the presence of a transient state. As a variant, the existence of such a state may result from observing the variations of the position of this pedal if the latter is associated with a potentiometric sensor. Various additional measures may then be taken to ensure the correct operation of these variants for implementing the method according to the invention. Thus, so as not to lower the level of the driving agreeableness by too abrupt an advance reduction, it is preferable to delay the activation of the correction (for example by a few crankshaft revolutions). Such a delay is not annoying from the point of view of driving agreeableness to gear-ratio changes. Likewise, setting time limits for the advance correction is necessary during the reacceleration phase in order not to maintain a zero or reduced advance for too long, which would otherwise lower the level of the engine torque. The next step is a progressive return to the nominal advance, in stages of a few degrees per crankshaft revolution for example. Finally, in order not to disrupt the operation of the vehicle at start-up, the correction according to the invention may be inhibited for as long as the vehicle is not moving.

Furthermore, although the invention is described as incorporated into a device for regulating the ignition advance operating from signals provided by induction-pressure and engine-speed sensors, the invention may naturally be extended to devices in which the pressure sensor is replaced by an inducted-air flow-rate sensor.

## Claims

1. Method for correcting the ignition advance in a transient state of an internal-combustion engine propelling a motor vehicle, this advance being calculated as a function of the speed and of the pressure at the induction manifold of the engine, characterised in that an entry into a transient state of the engine is detected and the ignition advance (A) is then corrected as a function of the variation of the induction pressure (P) between two consecutive samples thereof, substantially until leaving the transient state.

2. Method according to Claim 1, in which the induction pressure is sampled, characterised in that the transient-state advance correction ($TAC_i$) at the sampling instant (i) is obtained from the expression:

$$TAC_i = \frac{|P_i - P_{i-1}|}{P_i} \times k$$

where $P_i$, $P_i$-1 are samples of the induction pressure and k is a scaling factor.

3. Method according to Claim 1, in which the induction pressure (P) is sampled, characterised in that the transient-state advance correction ($TAC_i$) at the sampling instant (i) is obtained from the expression:

$$TAC_i = \frac{|P_i - Pm_i|}{P_i} \times k$$

where $P_i$ is a sample of the induction pressure, k is a factor and $Pm_i$ is a filtered average pressure obtained by the recurrence formula:

$$Pm_i = Pm_{i-1} + (P_i - Pm_{i-1}) \times k'$$

where $k'$ is a factor between 0 and 1.

4. Method according to any one of Claims 1 to 3, characterised in that the application of the advance correction (TAC) at the entry into a transient phase is delayed when the latter is indicated by a deceleration.

5. Method according to Claim 4, in which the said deceleration is followed by an acceleration, characterised in that the advance correction (TAC) is removed after a predetermined time has elapsed.

6. Method according to Claim 5, characterised in that the correction (TAC) is removed progressively.

**7.** Method according to any one of Claims 1 to 6, characterised in that the application of the advance correction (TAC) is commanded when the absolute value of the derivative of the induction pressure (P) with respect to time exceeds a predetermined threshold.

**8.** Method according to any one of Claims 1 to 6, characterised in that the advance correction (TAC) is applied when entry into a transient state is detected by a sensor which is sensitive to the position or to the position variation of an accelerator pedal of the vehicle.

**9.** Method according to any one of Claims 1 to 6, characterised in that the advance correction (TAC) is applied when entry into a transient state is detected by a sensor which is sensitive to the state of a clutch member disposed in the transmission of the vehicle.

**10.** Application of the process according to any one of Claims 1 to 9 to the smoothing out of jerks in the speed of the engine on changing the gear ratio of a gearbox mounted on the output shaft of the engine.

**Patentansprüche**

**1.** Verfahren zum Korrigieren der Zündvoreilung in einem Übergangszustand einer ein Fahrzeug antreibenden Brennkraftmaschine, wobei die Voreilung abhängig von der Drehzahl und dem Druck im Ansaugkrümmer des Motors berechnet wird, dadurch gekennzeichnet, daß ein Eintritt in einen Übergangszustand des Motors festgestellt wird und die Zündvoreilung (A) dann abhängig von der Änderung des Ansaugdruckes (P) zwischen zwei aufeinanderfolgenden Meßwerten im wesentlichen solange korrigiert wird. bis der Übergangszustand verlassen wird.

**2.** Verfahren nach Anspruch 1. bei dem der Einlaßdruck gemessen wird, dadurch gekennzeichnet, daß die Korrektur ($TAC_i$) für die Voreilung im Übergangszustand zum Meßzeitpunkt (i) mit folgender Gleichung erhalten wird:

$$TAC_1 = \frac{|P_i - P_{i-1}|}{P_i} \times k$$

wobei $P_i$, $P_{i-1}$ Meßwerte des Einlaßdruckes und k ein Skalierfaktor sind.

**3.** Verfahren nach Anspruch 1. bei dem der Einlaßdruck (P) gemessen wird, dadurch gekennzeichnet. daß die Korrektur ($TAC_i$) für die Voreilung im Übergangszustand zum Meßzeitpunkt (i) mit folgender Gleichung erhalten wird:

$$TAC_i = \frac{|P_i - Pm_i|}{P_i} \times k$$

wobei $P_i$ ein Meßwert des Einlaßdruckes ist. k ein Faktor und $Pm_i$ ein gefilterter Durchschnittsdruck, der mit folgender laufend auftretender Formel erhalten wird:

$$Pm_i = Pm_{i-1} + (P_i - Pm_{i-1}) \times k'$$

wobei k' ein Faktor zwischen 0 und 1 ist.

**4.** Verfahren nach einem der Ansprüche 1 bis 3, dadurch gekennzeichnet, daß die Auslösung der Korrektur (TAC) für die Zündvoreilung bei Eintritt in eine transiente Phase verzögert wird, wenn letztere durch eine Verzögerung angezeigt wird.

**5.** Verfahren nach Anspruch 4, bei dem auf die Verzögerung eine Beschleunigung folgt, dadurch gekennzeichnet, daß die Korrektur (TAC) für die Zündvoreilung beendet wird, nachdem eine vorbestimmte Zeitspanne verstrichen ist.

**6.** Verfahren nach Anspruch 5, dadurch gekennzeichnet, daß die Korrektur (TAC) progressiv abgeschaltet wird.

**7.** Verfahren nach einem der Ansprüche 1 bis 6, dadurch gekennzeichnet, daß der Beginn der Korrektur (TAC) für die Voreilung ausgelöst wird, wenn der Absolutwert der Ableitung des Ansaugdruckes (P) bezüglich der Zeit einen vorbestimmten Schwellwert überschreitet.

**8.** Verfahren nach einem der Ansprüche 1 bis 6, dadurch gekennzeichnet, daß die Korrektur (TAC) für die Voreilung ausgelöst wird, wenn der Eintritt in einen Übergangszustand von einem Sensor erfaßt wird, der auf die Position oder die Positionsänderung des Gaspedals des Fahrzeugs anspricht.

**9.** Verfahren nach einem der Ansprüche 1 bis 6, dadurch gekennzeichnet, daß die Korrektur (TAC) für die Voreilung ausgelöst wird, wenn der Eintritt in einen Übergangszustand von einem Sensor erfaßt wird, der auf den Zustand eines Kupplungsbauteils im Fahrzeuggetriebe anspricht.

**10.** Anwendung des Verfahrens nach einem der Ansprüche 1 bis 9, zum Dämpfen von Motordrehzahlsprüngen beim Gangwechsel eines an der Ausgangswelle des Motors sitzenden mechanischen Getriebes.

**Revendications**

1. Procédé de correction en régime transitoire de l'avance à l'allumage d'un moteur à combustion interne propulsant un véhicule automobile, cette avance étant normalement calculée en fonction du régime et de la pression au collecteur d'admission du moteur, caractérisé en ce qu'on détecte une entrée en régime transitoire du moteur et on corrige alors l'avance (A) à l'allumage en fonction de la variation de la pression d'admission (P) entre deux échantillons consécutifs de celle-ci, sensiblement jusqu'à la sortie du régime transitoire.

2. Procédé conforme à la revendication 1, dans lequel la pression d'admission est échantillonnée, caractérisé en ce qu'on tire la correction $(CAT_i)$ d'avance en régime transitoire à l'instant d'échantillonnage (i) de l'expression :

$$CAT_i = \frac{|P_i - P_{i-1}|}{P_i} \times k$$

où $P_i$, $P_{i-1}$ sont des échantillons de la pression d'admission et k un facteur d'échelle.

3. Procédé conforme à la revendication 1, dans lequel la pression d'admission (P) est échantillonnée, caractérisé en ce qu'on tire la correction $(CAT_i)$ d'avance en régime transitoire à l'instant d'échantillonnage (i) de l'expression :

$$CAT_i = \frac{|P_i - Pm_i|}{P_i} \times k$$

où $P_i$ est un échantillon de la pression d'admission, k un facteur et $Pm_i$ une pression moyenne filtrée obtenue par la formule récurrente :

$$Pm_i = Pm_{i-1} + (P_i - Pm_{i-1}) \times k'$$

où k' est un facteur compris entre 0 et 1.

4. Procédé conforme à l'une quelconque des revendications 1 à 3, caractérisé en ce qu'on temporise l'application de la correction d'avance (CAT) à l'entrée en phase transitoire quand celle-ci est marquée par une décélération.

5. Procédé conforme à la revendication 4, dans lequel ladite décélération est suivie par une accélération, caractérisé en ce qu'on supprime la correction d'avance (CAT) après l'écoulement d'un temps prédéterminé.

6. Procédé conforme à la revendication 5, caractérisé en ce que la suppression de la correction (CAT) est progressive.

7. Procédé conforme à l'une quelconque des revendications 1 à 6, caractérisé en ce qu'on commande l'application de la correction d'avance (CAT) quand la valeur absolue de la dérivée de la pression d'admission (P) par rapport au temps dépasse un seuil prédéterminé.

8. Procédé conforme à l'une quelconque des revendications 1 à 7, caractérisé en ce qu'on applique la correction d'avance (CAT) sous la commande d'un capteur sensible à la position ou à la variation de position d'une pédale d'accélérateur du véhicule.

9. Procédé conforme à l'une quelconque des revendications 1 à 6, caractérisé en ce qu'on applique la correction d'avance (CAT) sous la commande d'un capteur sensible à l'état d'un organe d'embrayage disposé dans la transmission du véhicule.

10. Application du procédé conforme à l'une quelconque des revendications 1 à 9, au lissage des à-coups du régime du moteur lors du changement du rapport d'une boîte de vitesses montée sur l'arbre de sortie du moteur.

FIG.: 1
PRIOR ART

FIG.: 2